(19) Europäisches Patentamt / European Patent Office / Office européen des brevets

(11) **EP 4 645 346 A1**

(12) **EUROPEAN PATENT APPLICATION**
published in accordance with Art. 153(4) EPC

(43) Date of publication:
**05.11.2025  Bulletin 2025/45**

(21) Application number: **23912042.1**

(22) Date of filing: **25.12.2023**

(51) International Patent Classification (IPC):
**H01B 13/00** (2006.01)     **H01M 10/0562** (2010.01)

(52) Cooperative Patent Classification (CPC):
**H01B 13/00; H01M 10/0562;** Y02E 60/10

(86) International application number:
**PCT/JP2023/046398**

(87) International publication number:
**WO 2024/143262 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **28.12.2022  JP 2022212572**

(71) Applicant: **AGC INC.**
**Chiyoda-ku,**
**Tokyo 1008405 (JP)**

(72) Inventor: **ANDO Ryota**
**Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING SULFIDE SOLID ELECTROLYTE COMPOSITE, SULFIDE SOLID ELECTROLYTE COMPOSITE, AND METHOD FOR PRODUCING COMPOSITE POWDER**

(57)     Provided is a method for producing a sulfide solid electrolyte composite, the method comprising: adding a metal compound into a solution, which contains at least one sulfide solid electrolyte raw material, and dispersing the metal compound or a compound derived from the metal compound to obtain a metal dispersion; removing a solvent from the metal dispersion to obtain a composite powder of the sulfide solid electrolyte raw material and the metal compound or a compound derived from the metal compound; and obtaining a sulfide solid electrolyte composite by using the composite powder.

*FIG. 1*

EP 4 645 346 A1

**Description**

TECHNICAL FIELD

The present invention relates to a method for producing a sulfide solid electrolyte composite, the sulfide solid electrolyte composite, and a method for producing a composite powder.

BACKGROUND ART

Lithium-ion secondary batteries are widely used in portable electronic devices such as mobile phones and laptop computers. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte. However, although a sulfide solid electrolyte has high ionic conductivity and excellent moldability, when the sulfide solid electrolyte is exposed to an atmosphere, the sulfide solid electrolyte reacts with moisture in the atmosphere to generate hydrogen sulfide. In order to reduce a generation amount of hydrogen sulfide, there is a method in which a predetermined metal compound is added to a raw material of the sulfide solid electrolyte to produce the sulfide solid electrolyte. For example, Patent Literature 1 describes a method for producing a sulfide solid electrolyte by adding tin sulfide to a raw material.

CITATION LIST

PATENT LITERATURE

Patent Literature 1: JP2022-139139A

SUMMARY OF INVENTION

TECHNICAL PROBLEM

In the case of producing the sulfide solid electrolyte by adding a metal compound such as tin sulfide to the raw material, since the metal compound such as tin sulfide often has a larger specific gravity than other ingredients, each component is easily separated at each stage such as preparation, transport, and stirring. Therefore, the components tend to be deviated, making it difficult to homogenize the components. Such a problem may significantly occur particularly when a sulfide solid electrolyte is produced on a large scale.

Therefore, an object of the present invention is to provide a method for producing a sulfide solid electrolyte composite in which generation of hydrogen sulfide due to a reaction with moisture in an atmosphere is prevented and a deviation of a component is small, and to provide the sulfide solid electrolyte composite.

SOLUTION TO PROBLEM

As a result of intensive studies, the present inventors have first found that a sulfide solid electrolyte composite having a small component deviation is obtained by adding a metal compound such as tin sulfide to a solution containing at least one sulfide solid electrolyte raw material to obtain a dispersion liquid of the metal compound or the like and the sulfide solid electrolyte raw material, and producing a sulfide solid electrolyte composite using a composite powder obtained by removing a solvent of the dispersion liquid, and have completed the present invention.

That is, the present invention relates to the following [1] to [15].

[1] A method for producing a sulfide solid electrolyte composite, the method including:

adding a metal compound to a solution containing at least one sulfide solid electrolyte raw material and dispersing the metal compound or a compound derived from the metal compound to obtain a metal dispersion liquid;
removing a solvent of the metal dispersion liquid to obtain a composite powder of the metal compound or the compound derived from the metal compound and the sulfide solid electrolyte raw material; and
obtaining the sulfide solid electrolyte composite using the composite powder.

[2] The method for producing a sulfide solid electrolyte composite according to [1], in which the sulfide solid electrolyte composite is obtained by a solid phase method using the composite powder.

[3] The method for producing a sulfide solid electrolyte composite according to [1], in which the sulfide solid electrolyte composite is obtained by a melting method using the composite powder.

[4] The method for producing a sulfide solid electrolyte composite according to [1], in which the metal compound is a tin compound.

[5] The method for producing a sulfide solid electrolyte composite according to [1], in which the metal compound is a metal sulfide.

[6] The method for producing a sulfide solid electrolyte composite according to [5], in which the metal sulfide is tin sulfide.

[7] The method for producing a sulfide solid electrolyte composite according to [1], in which the sulfide solid electrolyte raw material is a lithium halide.

[8] The method for producing a sulfide solid electrolyte composite according to [7], in which the lithium halide is lithium bromide.

[9] The method for producing a sulfide solid electrolyte composite according to [1], in which the sulfide solid electrolyte raw material is lithium hydroxide.

[10] The method for producing a sulfide solid electrolyte composite according to [1], in which the solvent is removed after adding an alkali metal sulfide to the metal dispersion liquid.

[11] The method for producing a sulfide solid electrolyte composite according to [10], in which the alkali metal sulfide is lithium sulfide.

[12] The method for producing a sulfide solid electrolyte composite according to [1], in which the solvent is removed after introducing hydrogen sulfide into the metal dispersion liquid.

[13] The method for producing a sulfide solid electrolyte composite according to [1], in which the sulfide solid electrolyte composite is obtained using the composite powder which has been reacted with hydrogen sulfide.

[14] A sulfide solid electrolyte composite containing a metal sulfide, in which a variation of the metal sulfide in the sulfide solid electrolyte composite is 15% or less.

[15] A method for producing a composite powder, the method including:

adding a metal compound to a solution containing at least one sulfide solid electrolyte raw material and dispersing the metal compound or a compound derived from the metal compound to obtain a metal dispersion liquid; and removing a solvent of the metal dispersion liquid to obtain the composite powder of the metal compound or the compound derived from the metal compound and the sulfide solid electrolyte raw material.

ADVANTAGEOUS EFFECTS OF INVENTION

According to a production method of the present invention, generation of hydrogen sulfide due to a reaction with moisture in an atmosphere is prevented, and a sulfide solid electrolyte composite having a small component deviation is obtained.

BRIEF DESCRIPTION OF DRAWINGS

FIG. 1 shows a flow chart of a method for producing a sulfide solid electrolyte composite according to one embodiment of the present invention.

FIG. 2 shows an example of a flow chart for producing the sulfide solid electrolyte composite by a solid phase method using a composite powder in the method for producing a sulfide solid electrolyte composite according to the embodiment of the present invention.

FIG. 3 shows an example of a flow chart for producing the sulfide solid electrolyte composite by a melting method using the composite powder in the method for producing a sulfide solid electrolyte composite according to the embodiment of the present invention.

DESCRIPTION OF EMBODIMENTS

Hereinafter, the present invention will be described in detail, but the present invention is not limited to the following embodiment and can be freely modified and implemented without departing from the gist of the present invention. In addition, "to" indicating a numerical range is used to include numerical values written before and after it as a lower limit value and an upper limit value.

<<Method for Producing Sulfide Solid Electrolyte Composite>>

A method for producing a sulfide solid electrolyte composite according to one embodiment of the present invention (hereinafter, also referred to as the present production method) includes: adding a metal compound to a solution containing at least one sulfide solid electrolyte raw material to obtain a metal dispersion liquid in which the metal compound or a compound derived from the metal compound is dispersed; removing a solvent of the metal dispersion liquid to obtain a composite powder of the metal compound or the compound derived from the metal compound and the sulfide solid electrolyte raw material; and obtaining the sulfide solid electrolyte composite using the composite powder.

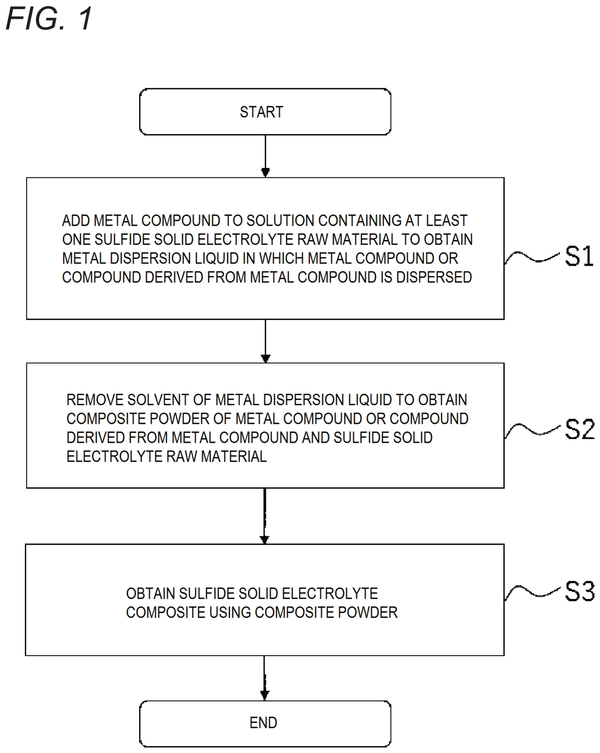

FIG. 1 shows an example of a flow chart of the present production method. In the present production method, first, the metal compound is added to the solution containing at least one sulfide solid electrolyte raw material to obtain the metal dispersion liquid in which the metal compound or the compound derived from the metal compound (hereinafter, the metal compound or the compound derived from the metal compound is also collectively referred to as "the metal compound or the like") is dispersed (step S1). Subsequently, the solvent of the obtained metal dispersion liquid is removed to obtain the composite powder of the metal compound or the compound derived from the metal compound (metal compound or the like) and the sulfide solid electrolyte raw material (step S2). The sulfide solid electrolyte composite is obtained using the obtained composite powder (step S3).

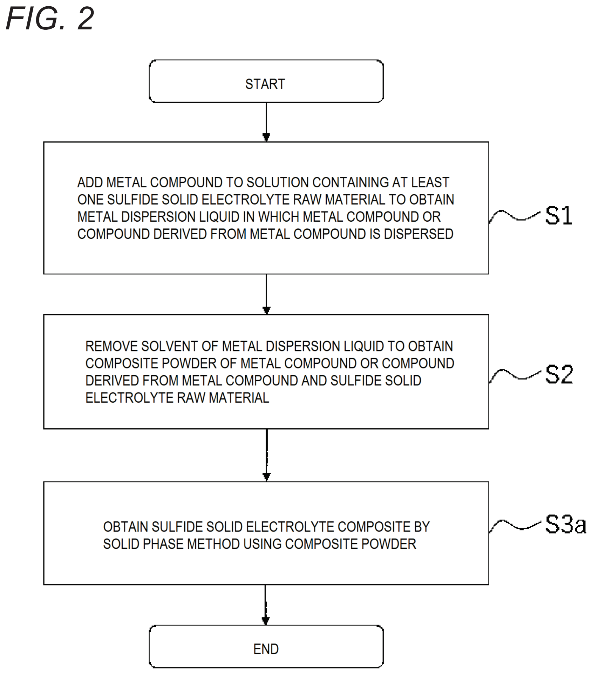

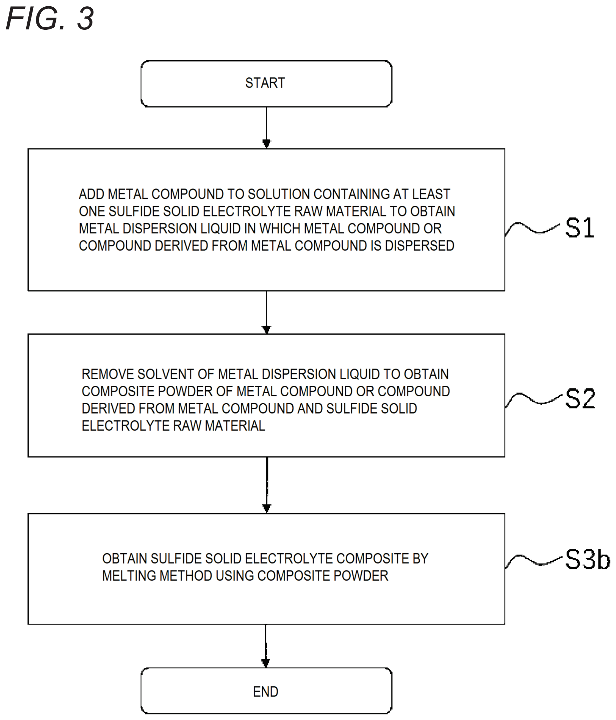

FIG. 2 shows an example of a flow chart for producing the sulfide solid electrolyte composite by a solid phase method using the composite powder. FIG. 3 shows an example of a flow chart for producing the sulfide solid electrolyte composite by a melting method using the composite powder.

In the solid phase method, as shown in FIG. 2, step S3 in FIG. 1 is replaced with step S3a, which is a step of obtaining the sulfide solid electrolyte composite by the solid phase method using the composite powder (step S3a).

On the other hand, in the melting method, as shown in FIG. 3, step S3 in FIG. 1 is replaced with step S3b, which is a step of obtaining the sulfide solid electrolyte composite by the melting method using the composite powder (step S3b).

It is preferable that steps S1 to S3 are performed continuously, and when this continuous production method is adopted, the effect of the present invention is further enhanced.

The sulfide solid electrolyte composite obtained by the present production method is a composite of a sulfide solid electrolyte and a metal sulfide, and the metal sulfide is present in a dispersed state in the sulfide solid electrolyte. In other words, the metal sulfide is present with high homogeneity in the sulfide solid electrolyte. Examples of such a metal sulfide include tin sulfide (SnS) and the like as described later, and generation of hydrogen sulfide due to a reaction of the sulfide solid electrolyte with moisture in an atmosphere is prevented. Since the metal sulfide is present with high homogeneity in the sulfide solid electrolyte, it is possible to prevent deterioration of battery performance which is caused by a deviation of a component.

"The metal sulfide in a dispersed state in the sulfide solid electrolyte" includes a state in which the metal sulfide is incorporated into a skeleton structure of the sulfide solid electrolyte and is homogeneously solid-solved, and a state in which the metal sulfide is not incorporated into a skeleton structure of the sulfide solid electrolyte and is dispersed as an independent metal sulfide component.

In the present production method, examples of the method for producing a sulfide solid electrolyte composite in which the metal sulfide is present with high homogeneity in the sulfide solid electrolyte include the following first to third methods.

The first method is a method in which the metal sulfide is used as the metal compound to obtain the metal dispersion liquid (metal sulfide dispersion liquid) in which the metal sulfide is dispersed in the solution containing the sulfide solid electrolyte raw material from the beginning.

That is, in step S1, the metal sulfide is used as the metal compound, and the metal sulfide is dispersed in the solution containing at least one sulfide solid electrolyte raw material, thereby obtaining the metal dispersion liquid (metal sulfide dispersion liquid). According to the method, by removing the solvent in the subsequent step S2, the composite powder in which the metal sulfide is dispersed in the sulfide solid electrolyte raw material is obtained. In the subsequent step S3, the sulfide solid electrolyte composite in which the metal sulfide is dispersed in the sulfide solid electrolyte is obtained by the solid phase method or the melting method using the composite powder.

The first method is preferable in that a type, a particle size, and the like of the metal sulfide to be dispersed can be easily adjusted because the metal sulfide to be dispersed can be prepared in a separate step.

The second method is a method in which a metal compound other than the metal sulfide is added to the solution containing the sulfide solid electrolyte raw material, the metal compound or the like is dispersed, and then the metal compound or the like is sulfurized in the solution to form the metal sulfide, thereby obtaining the metal dispersion liquid (metal sulfide dispersion liquid) in which the metal sulfide is dispersed in the solution containing the sulfide solid electrolyte raw material.

That is, in step S1, unlike the first method, a metal that has been sulfurized in advance (metal sulfide) is not used as the metal compound, but a metal compound that contains the metal itself constituting the metal sulfide dispersed in the finally obtained sulfide solid electrolyte composite and has not been sulfurized in advance is added to the solution containing the sulfide solid electrolyte raw material, and the metal compound or the like is dispersed, and then, before removing the solvent in step S2, the metal compound or the like dispersed in the solution is sulfurized to obtain the metal dispersion liquid (metal sulfide dispersion liquid). In the subsequent step S2, the solvent is removed to obtain the composite powder in which the metal sulfide is dispersed in the sulfide solid electrolyte raw material. In the subsequent step S3, the sulfide solid electrolyte composite in which the metal sulfide is dispersed in the sulfide solid electrolyte is obtained by the solid phase method or the melting method using the composite powder.

The second method is preferable in that the metal sulfide generated by sulfurizing the metal compound dissolved in the dispersion liquid or the metal compound or the like which has dispersed in the metal dispersion liquid can be generated with a relatively small particle size, and a sulfide solid electrolyte composite in a good dispersion state can be easily obtained without a separate pulverization step.

The third method is a method in which a metal compound other than the metal sulfide is added to the solution containing the sulfide solid electrolyte raw material, the metal compound or the like is dispersed, the solvent is removed to obtain a composite powder in which the metal compound or the like is dispersed in the sulfide solid electrolyte raw material, the metal compound or the like is sulfurized in the powder to obtain the metal sulfide, thereby obtaining the composite powder in which the metal compound is dispersed in the sulfide solid electrolyte raw material.

That is, in step S1, unlike the first method, a metal that has been sulfurized in advance (metal sulfide) is not used as the metal compound, but a metal compound that contains the metal itself constituting the metal sulfide dispersed in the finally obtained sulfide solid electrolyte composite and has not been sulfurized in advance is added to the solution containing the sulfide solid electrolyte raw material, and the metal compound or the like is dispersed, and then, in step S2, the solvent is removed to obtain the composite powder in which the metal compound or the like is dispersed in the sulfide solid electrolyte raw material. In this method, at the stage in which the solvent is removed in step S2, the composite powder in which the metal sulfide is dispersed in the sulfide solid electrolyte raw material is not obtained, and instead, the composite powder in which the metal compound or the like is dispersed in the sulfide solid electrolyte raw material is obtained. Therefore, before proceeding to step S3, the metal compound or the like dispersed in the sulfide solid electrolyte raw material is sulfurized to obtain the composite powder in which the metal sulfide is dispersed in the sulfide solid electrolyte raw material. In the subsequent step S3, the sulfide solid electrolyte composite in which the metal sulfide is dispersed in the sulfide solid electrolyte is obtained by the solid phase method or the melting method using the composite powder.

The third method is preferred in that a homogeneously dispersed metal sulfide raw material can be obtained since a more homogeneous dispersion state is more easily obtained by dispersing the metal compound or the like in the dispersion liquid rather than dispersing the metal sulfide. When the sulfide solid electrolyte raw material in which the metal sulfide is to be dispersed is to be subjected to a step of sulfurization, the sulfide solid electrolyte raw material itself can be sulfurized simultaneously with the generation of the metal sulfide to be dispersed, which is preferable in that the number of sulfurization steps can be reduced.

Hereinafter, the present production method will be described in detail for each of the above steps.

<Preparation of Metal Dispersion Liquid >

In the present production method, first, the metal compound is added to the solution containing at least one sulfide solid electrolyte raw material to obtain the metal dispersion liquid in which the metal compound or the compound derived from the metal compound (metal compound or the like) is dispersed (step S1).

(Metal Compound)

The metal compound used in the present production method (hereinafter, also simply referred to as the metal compound) is a metal compound containing a metal constituting the metal sulfide dispersed in the sulfide solid electrolyte composite finally obtained by the present production method, and may be a metal sulfide or a metal compound other than the metal sulfide. When the metal sulfide is used as the metal compound, the present production method corresponds to the first method described above. When the metal compound other than the metal sulfide is used as the metal compound, the present production method corresponds to the second or third method described above, and at a predetermined timing in the present production method, the metal compound is sulfurized to form the metal sulfide.

Examples of the metal compound include a tin compound, an iron compound, a nickel compound, a cobalt compound, a manganese compound, a titanium compound, and elemental forms of these metals. These may be used alone or in combination of two or more kinds thereof.

When the metal sulfide is used as the metal compound, examples of the metal sulfide include tin sulfides ($SnS$ and $SnS_2$), iron sulfide, nickel sulfide, cobalt sulfide, manganese sulfide, and titanium sulfide. Among these, tin sulfides ($SnS$ and $SnS_2$) are preferable from the viewpoint that the effect of preventing generation of $H_2S$ can be further exhibited. These may be used alone or in combination of two or more kinds thereof.

When the metal compound other than the metal sulfide is used as the metal compound, examples of the metal compound include tin chloride, tin bromide, tin iodide, tin hydroxide, metallic tin, and hydrates thereof. These may be used alone or in combination of two or more kinds thereof. Among these, tin chloride, tin bromide, tin iodide, and hydrates thereof are preferable from the viewpoint of solubility in a solvent, in particular, solubility in water which is easy to handle, and good dispersibility in water which is a polar solvent.

An average particle diameter of the metal compound is preferably, for example, 100 $\mu$m to 1000 $\mu$m from the viewpoint of ease of handling of a powder when the metal compound is completely dissolved in the solvent. On the other hand, when the metal compound is not completely dissolved in the solvent, the average particle diameter is preferably, for example, 0.01 $\mu$m to 10 $\mu$m from the viewpoint of dispersing the metal compound in a solution, which will be described later. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

An amount of the metal compound to be added to the solution to be described below is preferably 0.1% by mass to 10% by mass relative to the solution. When the amount of the metal compound is 0.1% by mass or more, the effect of the metal sulfide can be sufficiently exhibited, and when the amount of the metal compound is 10% by mass or less, the dispersibility of the metal compound in the solution is easily maintained good. The amount of the metal compound is more preferably 0.2% by mass or more, and still more preferably 0.3% by mass or more, and is more preferably 5% by mass or less, and still more preferably 3% by mass or less.

(Sulfide Solid Electrolyte Raw Material)

The solution to which the metal compound is added contains the at least one sulfide solid electrolyte raw material. The solution may or may not contain all of the sulfide solid electrolyte raw materials constituting the sulfide solid electrolyte composite finally obtained by the present production method. In the former case, when the sulfide solid electrolyte composite is obtained by the solid phase method, the melting method, or the like using the composite powder in step S3 to be described later, it is not necessary to separately add the sulfide solid electrolyte raw material. In contrast, in the latter case, when the sulfide solid electrolyte composite is obtained by the solid phase method, the melting method, or the like using the composite powder, a sulfide solid electrolyte raw material that is not contained in the above solution is separately added.

The at least one sulfide solid electrolyte raw material contained in the solution preferably has solubility from the viewpoint of homogeneously dispersing the metal compound.

As the sulfide solid electrolyte raw material, a commercially available sulfide solid electrolyte raw material may be used, or a sulfide solid electrolyte raw material produced from a material may be used. These sulfide solid electrolyte raw materials may be further subjected to a known pre-treatment. That is, the present production method may appropriately include a step of producing the sulfide solid electrolyte raw material and a step of performing a pre-treatment on the sulfide solid electrolyte raw material.

The sulfide solid electrolyte raw material is specifically described below. The sulfide solid electrolyte raw material usually contains an alkali metal element (R) and a sulfur element (S).

Examples of the alkali metal element (R) include lithium element (Li), sodium element (Na), and potassium element (K), and among these elements, the lithium element (Li) is preferable. As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide ($Li_2S$), lithium iodide (LiI), lithium carbonate ($Li_2CO_3$), lithium sulfate ($Li_2SO_4$), lithium oxide ($Li_2O$), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide ($P_2S_3$) and phosphorus pentasulfide ($P_2S_5$), other sulfur compounds containing phosphorus, elemental sulfur, and a compound containing sulfur. Examples of the compound containing sulfur include $H_2S$, $CS_2$, iron sulfides (such as FeS, $Fe_2S_3$, $FeS_2$, $Fe_{1-x}S$), bismuth sulfide ($Bi_2S_3$), and copper sulfides (such as CuS, $Cu_2S$, $Cu_{1-x}S$). From the viewpoint of obtaining a sulfide material, the substance containing the sulfur element (S) is preferably phosphorus sulfide, and more preferably phosphorus pentasulfide ($P_2S_5$). These may be used alone or in combination of two or more kinds thereof. Phosphorus sulfide can be considered as a compound that serves as both the S-containing substance and a P-containing substance, which is described later.

From the viewpoint of improving ionic conductivity and the like of the obtained sulfide solid electrolyte, it is preferable that the sulfide solid electrolyte raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide ($P_2S_3$) and phosphorus pentasulfide ($P_2S_5$), phosphorus compounds such as sodium phosphate ($Na_3PO_4$), and elemental phosphorus. As the substance containing the phosphorus element (P), from the viewpoint of exerting the effect of the present invention more effectively, phosphorus sulfides having high volatility are preferable, and phosphorus pentasulfide ($P_2S_5$) is more preferable. These may be used alone or in combination of two or more kinds thereof.

The sulfide solid electrolyte raw material may be obtained as a mixed raw material by, for example, appropriately mixing the above-mentioned substances according to a composition of a target sulfide solid electrolyte. A mixing ratio is not particularly limited, but for example, a molar ratio S/R of the sulfur element (S) to the alkali metal element (R) in the sulfide solid electrolyte raw material is preferably 0.65/0.35 or less, and more preferably 0.5/0.5 or less, from the viewpoint of improving the ionic conductivity and the like of the obtained sulfide solid electrolyte. The mixed raw material is preferably obtained by mixing the raw materials in a predetermined stoichiometric mixture ratio according to the materials used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the sulfide solid electrolyte raw material include a combination of $Li_2S$ and $P_2S_5$. When $Li_2S$ and $P_2S_5$ are combined, a molar ratio Li/P of Li to P is preferably 40/60 or more, and more preferably 50/50 or more. The molar ratio Li/P of Li to P, is preferably 88/12 or less. The molar ratio Li/P of Li to P is preferably from 40/60 to 88/12, and more preferably from 50/50 to 88/12. By adjusting the mixing ratio so that an amount of $P_2S_5$ is relatively smaller than $Li_2S$, it becomes easier to prevent volatilization of sulfur and phosphorus components during a heat treatment due to a smaller boiling point of $P_2S_5$ compared to a melting point of $Li_2S$.

On the other hand, since lithium sulfide is expensive, a lithium compound other than lithium sulfide, metallic lithium, or the like may be used from the viewpoint of reducing a production cost of the sulfide solid electrolyte. Specifically, in this case, the sulfide solid electrolyte raw material preferably contains one or more selected from the group consisting of metallic lithium, lithium iodide (LiI), lithium carbonate ($Li_2CO_3$), lithium sulfate ($Li_2SO_4$), lithium oxide ($Li_2O$), and lithium hydroxide (LiOH) as the Li-containing substance. These may be used alone or in combination of two or more kinds thereof.

The sulfide solid electrolyte raw material may contain further substances (compounds and the like) in addition to the above substances depending on the composition of the target sulfide solid electrolyte or as additives or the like.

For example, when producing a sulfide solid electrolyte containing a halogen element such as F, Cl, Br or I, the sulfide solid electrolyte raw material preferably contains a halogen element (Ha). In this case, the sulfide solid electrolyte raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These may be used alone or in combination of two or more kinds thereof.

An alkali metal halide such as lithium halides is also a compound containing an alkali metal element such as Li. When the sulfide solid electrolyte raw material contains an alkali metal halide, a part or all of the alkali metal element such as Li in the sulfide solid electrolyte raw material may be derived from the alkali metal halide such as lithium halides.

When the sulfide solid electrolyte raw material contains the halogen element (Ha) and the phosphorus element (P), a molar equivalent of Ha relative to P in the sulfide solid electrolyte raw material is preferably 0.2 molar equivalents or more, and more preferably 0.5 molar equivalents or more, from the viewpoint of improving the ionic conductivity and the like of the obtained sulfide solid electrolyte. The molar equivalent of Ha is preferably 4 molar equivalents or less, and more preferably 3 molar equivalents or less, from the viewpoint of stability of the obtained sulfide solid electrolyte.

The obtained sulfide solid electrolyte may be an amorphous sulfide solid electrolyte depending on a purpose, and from the viewpoint of improving ease of generation of an amorphous phase, it is also preferable that the sulfide solid electrolyte raw material contains sulfides such as $SiS_2$, $B_2S_3$, $GeS_2$, and $Al_2S_3$. By facilitating the generation of the amorphous phase, when the amorphous substance is obtained by rapid cooling, the amorphous sulfide solid electrolyte can be obtained even when a cooling rate is reduced, thereby reducing a load on an apparatus.

From the viewpoint of imparting moisture resistance to the sulfide solid electrolyte, it is also preferable that oxides such as $SiO_2$, $B_2O_3$, $GeO_2$, $Al_2O_3$, and $P_2O_5$ are contained. These may be used alone or in combination of two or more kinds thereof.

Among the sulfide solid electrolyte raw materials described above, as the sulfide solid electrolyte raw material contained in the solution, a lithium halide, lithium hydroxide, lithium sulfate, and the like are preferable from the viewpoint of ease of handling as a solvent and high solubility in water. The lithium halide is preferably lithium bromide.

An average particle diameter of the sulfide solid electrolyte raw material contained in the solution is preferably, for example, 100 μm to 1000 μm from the viewpoint of ease of handling as a powder. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

An amount of the sulfide solid electrolyte raw material contained in the solution is preferably 10% by mass to 40% by mass with respect to the solution. When the amount of the sulfide solid electrolyte raw material is 10% by mass or more, it is advantageous in that a cost of removing the solvent is reduced in the later step of removing the solvent, and when the amount is 40% by mass or less, an undissolved residue of the sulfide solid electrolyte raw material can be reduced. The amount of the sulfide solid electrolyte raw material is more preferably 15% by mass or more, and still more preferably 20% by mass or more, and more preferably 35% by mass or less, and still more preferably 30% by mass or less.

The solution may contain any component in addition to the sulfide solid electrolyte raw material, and examples thereof include a solvent and a dispersant.

Examples of the solvent include water and ethanol. The solvent is preferably water, and in this case, the solution means an aqueous solution.

Examples of the dispersant include sodium polyacrylate, a sulfonic acid copolymer, and a carboxylic acid copolymer.

(Metal Dispersion Liquid)

The metal dispersion liquid may be in a state in which the metal compound itself added to the solution is dispersed in the solution, or in a state in which the compound derived from the metal compound added to the solution is dispersed in the solution.

The state in which the metal compound itself is dispersed in the solution means, for example, a state in which, when tin chloride is used as the metal compound, a basic salt derived from tin chloride (Sn(OH)Cl) is dispersed in the above solution, or, for example, a state in which, when tin sulfide is used as the metal compound, tin sulfide is dispersed in the above solution. In the former case, when the metal compound (tin chloride) is sulfurized as described later, the metal sulfide (tin sulfide) is dispersed in the above solution.

The state in which the compound derived from the metal compound is dispersed in the solution means, for example, a state in which, when tin chloride is used as the metal compound, a basic salt derived from tin chloride (Sn(OH)Cl) is dispersed in the above solution.

A method for dispersing the metal compound in the solution is not particularly limited, and examples thereof include stirring, pulverization, and addition of a dispersant.

As a stirring method, a known method in the related art can be used, and an emulsification apparatus such as a homogenizer, homomixer, colloid mill, ultrasonic emulsifier, and homodisperser can be used.

As a pulverization method, a known method in the related art can be used, and for example, a wet-type jet mill apparatus can be used.

As a method of adding a dispersant, a known method in the related art can be used, and as the dispersant, for example, sodium polyacrylate, a sulfonic acid copolymer, a carboxylic acid copolymer, or the like can be used.

As described above, the metal dispersion liquid is prepared.

(Sulfuration of Metal Compound or the like)

When the metal sulfide is not used as the metal compound, the metal compound or the like dispersed in the metal dispersion liquid may be sulfurized to form the metal sulfide before proceeding to step S2 of removing the solvent, thereby obtaining the metal dispersion liquid (metal sulfide dispersion liquid) in which the metal sulfide is dispersed. This corresponds to the case where the second method described above in the section "Method for Producing Sulfide Solid Electrolyte Composite" is used as the present production method.

A method for sulfurizing the metal compound or the like in the metal dispersion liquid is not particularly limited, but examples thereof include a method in which a sulfide is added to a metal dispersion liquid and the sulfide is reacted with the metal compound or the like in the metal dispersion liquid to sulfurize the metal compound or the like, and a method in which hydrogen sulfide is introduced into the metal dispersion liquid to sulfurize the metal compound or the like.

In a method for adding a sulfide to a metal dispersion liquid, as the sulfide, from the viewpoint of being able to generate $S^{2-}$ ions by dissolving in the dispersion liquid, an alkali metal sulfide such as lithium sulfide, sodium sulfide, and potassium sulfide are preferred, and among these, lithium sulfide is more preferred.

An amount of the sulfide added to the metal dispersion liquid is preferably 0.05% by mass to 3.0% by mass with respect to the metal dispersion liquid. When the amount of the sulfide is 0.05% by mass or more, the effect of the metal sulfide can be sufficiently exhibited, and when the amount of the sulfide is 3.0% by mass or less, it is possible to reduce an unnecessary cost of introducing excess sulfide in an amount greater than an amount of $S^{2-}$ ions required to generate the metal sulfide. The amount of the sulfide is more preferably 0.10% by mass or more, and still more preferably 0.15% by mass or more, and more preferably 2.0% by mass or less, and still more preferably 1.0% by mass or less.

In a method for introducing hydrogen sulfide into the metal dispersion liquid, hydrogen sulfide may be introduced into the metal dispersion liquid as a gas, or a hydrogen sulfide solution may be introduced into the metal dispersion liquid.

As a condition for introducing hydrogen sulfide as the gas into the metal dispersion liquid, a nozzle is inserted into the metal dispersion liquid, and bubbling is performed, for example, at a normal temperature range of 5°C to 40°C for 5 minutes to 180 minutes. A temperature during the bubbling is preferably 10°C to 35°C, and more preferably 15°C to 30°C. A bubbling time is preferably from 10 minutes to 90 minutes, and more preferably from 15 minutes to 75 minutes. It is preferable to perform the bubbling.

As a condition for introducing the hydrogen sulfide solution into the metal dispersion liquid, a temperature is usually 5°C to 40°C, preferably 10°C to 35°C, and more preferably 15°C to 30°C. It is preferable to add saturated hydrogen sulfide water (about 0.1 mol/L).

<Preparation of Composite Powder>

In the present production method, subsequently, the solvent of the metal dispersion liquid is removed to obtain the composite powder of the metal compound or the compound derived from the metal compound (metal compound or the like) and the sulfide solid electrolyte raw material (step S2).

(Removal of Solvent)

In order to remove the solvent of the metal dispersion liquid, for example, a method for performing pressure reduction, heating, and drying is used by reducing a pressure to 2 kPa, gradually increasing a temperature to 160°C, and maintaining the temperature at 160°C using a vacuum drying apparatus equipped with a vibration mechanism.

(Composite Powder)

By removing the solvent of the metal dispersion liquid, the composite powder (hereinafter, also simply referred to as the composite powder) of the metal compound or the compound derived from the metal compound (metal compound or the like) and the sulfide solid electrolyte raw material is obtained. Here, the composite powder does not mean a mixture obtained by only mixing the metal compound or the like and the sulfide solid electrolyte raw material, but means a powder in which the metal compound or the like is dispersed in the sulfide solid electrolyte raw material. For example, when tin sulfide is used as the metal compound and lithium bromide is used as the sulfide solid electrolyte raw material, a composite powder in which tin sulfide is dispersed in lithium bromide is obtained.

"A state in which the metal sulfide is dispersed in the sulfide solid electrolyte raw material" includes a state in which the metal sulfide enters a skeleton structure of the sulfide solid electrolyte raw material and is homogeneously solid-solved, and a state in which the metal sulfide does not enter a skeleton structure of the sulfide solid electrolyte raw material and is homogeneously located.

(Sulfuration of Metal Compound or the like)

In the case where the metal sulfide is not used as the metal compound in step S1, and in the case where sulfurization of the metal compound or the like is not performed in step S1, the metal compound or the like dispersed in the composite powder may be sulfurized to form the metal sulfide before proceeding to step S3 of obtaining the sulfide solid electrolyte composite, thereby obtaining the composite powder in which the metal sulfide is dispersed in the sulfide solid electrolyte raw material. This corresponds to the case where the third method described above in the section "Method for Producing Sulfide Solid Electrolyte Composite" is used as the present production method.

A method for sulfurizing the metal compound or the like dispersed in the composite powder is not particularly limited, and examples thereof include a method for sulfurizing the metal compound or the like by introducing hydrogen sulfide into the composite powder. That is, according to this method, in step S3 to be described later, the sulfide solid electrolyte composite is obtained using the composite powder which has been reacted with hydrogen sulfide.

In the method for introducing hydrogen sulfide into the composite powder, there is a method for introducing hydrogen sulfide as a gas into the composite powder.

As a condition for introducing hydrogen sulfide as the gas into the composite powder, a method for introducing the hydrogen sulfide gas while stirring the powder is preferable in order to efficiently react the powder with hydrogen sulfide. A temperature is preferably 160°C to 220°C for the efficient reaction.

(Variation in Composite Powder)

In order to obtain a sulfide solid electrolyte composite having high homogeneity in which a deviation of a component is small in the sulfide solid electrolyte, it is preferable that the composite powder itself also has high homogeneity.

The homogeneity of the composite powder can be evaluated by a variation of the metal sulfide in the composite powder. The variation is preferably 25% or less, more preferably 20% or less, and still more preferably 15% or less. A lower limit of the variation is not particularly limited, but is usually 3% or more.

The variation of the metal sulfide in the composite powder refers to a variation determined by the following method. That is, first, five samples of 0.1 g are taken from the composite powder and heated, decomposed, and dissolved in nitric acid, sulfuric acid, and hydrofluoric acid (nitric acid + sulfuric acid + hydrofluoric acid), and each obtained substance is subjected to ICP (inductively coupled plasma) emission spectrometry to quantify a metal element in the metal sulfide in the composite powder. When there is a residue in a dissolved liquid, measurement is performed in a state in which the residue does not remain in the dissolved liquid by adjusting an amount of the acid, a proportion, a dissolution time, and a temperature.

Contents (% by mass) of the metal elements in the metal sulfides in the composite powders in the five samples determined under the above conditions are defined as A1 to A5. An arithmetic mean value Aave1 of A1 to A5 represented by the following formula is obtained.

[Math. 1]

$$Aave1 = (A1 + A2 + A3 + A4 + A5) / 5$$

The variation (%) is obtained by the following formula using A1 to A5 and Aave1 obtained by the above formula.

[Math. 2]

$$\text{Variation (\%)} = \frac{\{\sqrt{(A1-Aave1)^2}+\sqrt{(A2-Aave1)^2}+\sqrt{(A3-Aave1)^2}+\sqrt{(A4-Aave1)^2}+\sqrt{(A5-Aave1)^2}\}\ /5}{Aave1} \times 100$$

The above variation can be reduced by increasing dispersibility in the step of preparing the metal dispersion liquid by using a dispersed metal sulfide or a metal compound having a small particle size, by pulverizing the metal compound to reduce the particle size thereof, by using a dispersant, or the like.

As described above, the present invention also provides a method for producing a composite powder. That is, the method for producing a composite powder is also provided which includes adding a metal compound to a solution containing at least one sulfide solid electrolyte raw material and dispersing the metal compound or a compound derived from the metal compound to obtain a metal dispersion liquid; and removing a solvent of the metal dispersion liquid to obtain a composite powder of the metal compound or the compound derived from the metal compound and the sulfide solid electrolyte raw material.

<Production of Sulfide Solid Electrolyte Composite>

In the present production method, subsequently, the sulfide solid electrolyte composite is obtained using the composite powder (step S3). As described above, the sulfide solid electrolyte composite is a composite of the sulfide solid electrolyte and the metal sulfide, and the metal sulfide is present in the dispersed state in the sulfide solid electrolyte. In other words, the metal sulfide is present with high homogeneity in the sulfide solid electrolyte.

When the solution to which the metal compound is added does not contain all the sulfide solid electrolyte raw materials constituting the sulfide solid electrolyte composite finally obtained by the present production method in step S1 described above, in step S3, the sulfide solid electrolyte composite may be produced using the sulfide solid electrolyte raw material not contained in the solution in addition to the composite powder. As the sulfide solid electrolyte raw material used in this case, the same material as the sulfide solid electrolyte raw material described in the section of step S1 can be used, and among these, a substance containing a phosphorus element (P) such as phosphorus sulfide, a lithium compound such as lithium sulfide, a lithium halide such as lithium chloride, and the like are preferable from the viewpoint of easily adjusting components of the sulfide solid electrolyte and easily forming a high-quality sulfide solid electrolyte.

Examples of a method for obtaining the sulfide solid electrolyte composite using the composite powder include the method using the solid phase method as shown in FIG. 2 and the method using the melting method as shown in FIG. 3.

Hereinafter, the method using the solid phase method and the method using the melting method will be described separately.

(Solid Phase Method)

In the solid phase method, first, the sulfide solid electrolyte raw material is added to the composite powder as necessary and mixed.

The mixing can be performed by a known method in the related art, but mixing performed by mechanical milling is preferred. In the case of using the mechanical milling method using a ball mill, examples thereof include a rotary ball mill that provides rotation movement to a container, a vibrating ball mill that provides vibrational movement, a planetary ball mill that provides revolution and rotation movement, a bead mill, and Attritor (registered trademark). Among them, a planetary ball mill or a bead mill having a higher mixing force or pulverizing force is preferable.

The ball mill may be dry mixing or wet mixing using a dispersion medium, and dry mixing is preferable from the viewpoint of efficiently transmitting energy.

The raw materials are mixed by the mixing to form a raw material mixture. The raw material mixture is a precursor of the sulfide solid electrolyte. The precursor may be a homogeneous amorphous intermediate compound that has been amorphized by employing mixing conditions that are severer than mixing conditions in the related art. The amorphous intermediate compound means that an XRD peak derived from the raw material is not observed.

If desired, the method may further include a pulverizing step or a heat-treating step.

In the pulverizing step, either wet pulverization or dry pulverization may be used.

In the pulverizing step, an average particle diameter of the sulfide solid electrolyte composite is preferably 1 $\mu$m to 100 $\mu$m. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

The heat-treating step aims to enhance homogeneity and stabilize a quality of the sulfide solid electrolyte composite.

When the obtained sulfide solid electrolyte composite is heat-treated, a heating temperature varies depending on the composition of the sulfide solid electrolyte composite, and is, for example, preferably 200°C to 600°C, more preferably 350°C to 500°C, still more preferably 380°C to 460°C, and particularly preferably 400°C to 450°C. Here, from the viewpoint of the homogenization of the sulfide solid electrolyte and the stabilization of the quality, the heating temperature is preferably 200°C or higher, more preferably 350°C or higher, still more preferably 380°C or higher, and particularly preferably 400°C or higher. From the viewpoint of preventing sintering of particles, the heating temperature is preferably 600°C or lower, more preferably 500°C or lower, still more preferably 460°C or lower, and particularly preferably 450°C or lower.

When the sulfide solid electrolyte composite is heat-treated, the heating time varies depending on the composition of the sulfide solid electrolyte composite, and is, for example, preferably 10 minutes to 10 hours, more preferably 30 minutes to 9.5 hours, still more preferably 45 minutes to 9 hours, and particularly preferably 1 hour to 9 hours. Here, from the viewpoint of the homogenization of the sulfide solid electrolyte composite and the stabilization of the quality, a time for the heat treatment is preferably 10 minutes or more, more preferably 30 minutes or more, still more preferably 45 minutes or more, and particularly preferably 1 hour or more. From the viewpoint of the production cost, the time for the heat treatment is preferably 10 hours or less, more preferably 9.5 hours or less, and still more preferably 9 hours or less.

When the sulfide solid electrolyte composite is heat-treated, an atmosphere other than a $SO_2$ concentration during the heat treatment is preferably an inert atmosphere. Examples of the inert atmosphere include a nitrogen gas atmosphere, an argon gas atmosphere, and a helium gas atmosphere.

A dew point during the heat treatment is preferably -20°C or lower, and a lower limit thereof is not particularly limited, and is generally about -80°C. An oxygen concentration is preferably 1000 ppm by volume or less.

(Melting Method)

In the melting method, first, the sulfide solid electrolyte raw material is added to the above composite powder as necessary, and mixed to obtain the raw material mixture. The mixing is performed by, for example, mixing in a mortar, mixing using a medium such as a planetary ball mill, and medium-less mixing such as a pin mill, a powder stirrer, and air flow mixing.

Subsequently, the raw material mixture obtained above is heated to obtain a melt.

A specific method of heating and melting the raw material mixture is not particularly limited. For example, the raw material mixture is placed in a heat-resistant container and heated in a heating furnace. The raw material mixture may be sealed in the heat-resistant container. The melting may be performed in an atmosphere containing a sulfur element or the like. Examples of the sulfur element-containing atmosphere include a mixed gas atmosphere of an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above-described material, or may be a container having a layer of carbon, an oxide, a nitride, a carbide, or the like, such as a carbon-coated quartz tube.

A heating temperature when the raw material mixture is heated and melted varies depending on the raw materials to be used and the composition of the raw material mixture, but is, for example, preferably 550°C to 1000°C, more preferably 600°C to 950°C, still more preferably 630°C to 900°C, and particularly preferably 650°C to 800°C. Here, the heating temperature is preferably 550°C or higher, more preferably 600°C or higher, still more preferably 630°C or higher, and particularly preferably 650°C or higher, from the viewpoint of increasing a melting property of the raw material and homogenizing the melt in a short time. The heating temperature is preferably 1000°C or lower, more preferably 950°C or lower, still more preferably 900°C or lower, and particularly preferably 800°C or lower, from the viewpoints of preventing deterioration of components caused by heating, preventing a composition deviation caused by volatilization of components, and further preventing decomposition.

A time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. From the viewpoint of productivity, the time for the heating and melting is preferably 10 hours or less, more preferably 9.5 hours or less, and still more preferably 9 hours or less.

A pressure during the heating and melting is not particularly limited, but for example, a normal pressure or a slight pressure is preferred, and normal pressure is more preferred.

A dew point during the heating and melting is preferably -20°C or lower, and a lower limit thereof is not particularly limited, but is usually about -80°C. An oxygen concentration is preferably 1000 ppm by volume or less.

Whether the melt is completely dissolved can be checked by the absence of a peak derived from a crystal in high-temperature X-ray diffraction measurement.

Subsequently, the obtained melt is cooled to precipitate a crystal. The crystal obtained by the precipitation is the sulfide solid electrolyte composite.

The cooling may be performed by a known method, and the method is not particularly limited. Examples of a more specific cooling method include a method in which the melt is poured onto a plate-like body made of carbon or the like and then cooled, a method in which the melt is poured into a narrow gap to be formed into a thin shape, such as a twin roll process, and a gas atomizing method.

A cooling rate is preferably 0.1°C/sec to 10000°C/sec, more preferably 0.5°C/sec to 5000°C/sec, and still more preferably 1 °C/sec to 1000°C/sec. The cooling rate is preferably 0.1°C/sec or more, more preferably 0.5°C/sec or more, and still more preferably 1°C/sec or more, from the viewpoint of increasing composition homogeneity and preventing variation in quality. An upper limit value of the cooling rate is not particularly limited, and the upper limit value is $10^7$°C/sec or less in consideration of the cooling rate of a twin roller, which is generally said to have the highest rapid cooling rate, and from the viewpoint of actual production, the cooling rate is more preferably 10000°C/sec or less, still more preferably 5000°C/sec or less, and even more preferably 1000°C/sec.

An atmosphere during the cooling is preferably an inert atmosphere with a low moisture content, similar to that in the heating and melting.

If desired, the method may further include a pulverizing step or a heat-treating step.

In this case, each of the pulverizing step and the heat-treating step is the same as the pulverizing step and the heat-treating step in the solid phase method, and preferred aspects thereof are also the same. When an atomizing method capable of simultaneously cooling and powdering is adopted as a cooling method, the atomizing method also serves as the pulverizing step.

<<Sulfide Solid Electrolyte Composite>>

The sulfide solid electrolyte composite obtained by the present production method is a composite in which the metal sulfide is dispersed in the sulfide solid electrolyte. In other words, the sulfide solid electrolyte composite is a composite in which the metal sulfide is present with high homogeneity in the sulfide solid electrolyte. A crystal structure of the sulfide solid electrolyte (hereinafter, also simply referred to as the sulfide solid electrolyte) in the sulfide solid electrolyte composite is not particularly limited. Examples of the sulfide solid electrolyte include powders of a sulfide solid electrolyte having a crystal structure containing a Li element, a P element, and an S element, which is referred to as LPS, such as

$Li_7P_3S_{11}$, a sulfide solid electrolyte having a crystal structure containing a Li element, a Ge element, a P element, and an S element, which is referred to as LGPS, such as $Li_{10}GeP_2S_{12}$, a sulfide solid electrolyte having an argyrodite crystal structure containing a Li element, a P element, an S element, and a Ha element, and a sulfide solid electrolyte made of a Li-P-S-Ha-based crystallized glass.

The sulfide solid electrolyte may include a crystalline phase and an amorphous phase.

Among these, the argyrodite crystal structure is a crystal structure of a group of compounds derived from a mineral represented by a composition formula $Ag_8GeS_6$. The sulfide solid electrolyte is not limited to the above-described crystal structure, and some elements may be substituted with other elements.

When the sulfide solid electrolyte has the argyrodite crystal structure, the sulfide solid electrolyte more preferably contains, as a Ha element, at least one element selected from the group consisting of Cl, Br, and I, and still more preferably contains two or more elements.

The sulfide solid electrolyte further preferably contains at least one of Cl and Br, and still more preferably contains Cl and Br, as the Ha element.

The argyrodite crystal structure preferably has the above-described structure, and the composition formula is preferably represented by $Li_\alpha PS_\beta Ha_\gamma$ and satisfies relationships of $5 \leq \alpha \leq 7$, $4 \leq \beta \leq 6$, and $1.3 \leq \gamma \leq 2$. Such an element ratio more preferably satisfies relationships of $5.1 < \alpha < 6.3$, $4 < \beta < 5.3$, and $1.4 \leq \gamma \leq 1.9$, and still more preferably satisfies relationships of $5.2 < \alpha < 6.2$, $4.1 < \beta < 5.2$, and $1.5 \leq \gamma \leq 1.8$.

That is, $\alpha$ is preferably 5 or more, more preferably more than 5.1, and still more preferably more than 5.2, and is preferably 7 or less, more preferably less than 6.3, and still more preferably less than 6.2. $\beta$ is preferably 4 or more, more preferably more than 4, and still more preferably more than 4.1, and is preferably 6 or less, more preferably less than 5.3, and still more preferably less than 5.2. $\gamma$ is preferably 1.3 or more, more preferably 1.4 or more, and still more preferably 1.5 or more, and is preferably 2 or less, more preferably 1.9 or less, and still more preferably 1.8 or less.

In the argyrodite crystal structure, a part of the S element may be substituted with the Ha element, an O element, Se, Te, $BH_4$, CN, or the like. A part of the P element may be substituted with a Si element, an Al element, a Sn element, an In element, a Cu element, a Sb element, a Ge element, or the like.

As described above, the sulfide solid electrolyte composite is the composite in which the metal sulfide is dispersed in the sulfide solid electrolyte. That is, in the sulfide solid electrolyte composite, the metal sulfide is present with high homogeneity in the sulfide solid electrolyte.

The homogeneity in the sulfide solid electrolyte composite can be evaluated based on the variation of the metal sulfide in the sulfide solid electrolyte composite. The variation is preferably 15% or less, more preferably 12% or less, and still more preferably 10% or less. A lower limit of the variation is not particularly limited, but is usually 3% or more.

The variation of the metal sulfide in the sulfide solid electrolyte composite refers to a variation determined by the following method. That is, first, 0.1 g of the sulfide solid electrolyte composite is taken from each of five sulfide solid electrolyte composite samples produced using the composite powder in which the metal sulfide is dispersed, which is produced in the same batch, each sulfide solid electrolyte composite is heated, decomposed, and dissolved in nitric acid, sulfuric acid, and hydrofluoric acid (nitric acid + sulfuric acid + hydrofluoric acid), and an obtained substance is subjected to ICP (inductively coupled plasma) emission spectrometry to quantify a metal element in the metal sulfide in the sulfide solid electrolyte composite. When there is a residue in a dissolved liquid, measurement is performed in a state in which the residue does not remain in the dissolved liquid by adjusting an amount of the acid, a proportion, a dissolution time, and a temperature by adjusting an amount of the acid, a proportion, a dissolution time, and a temperature when there is a residue in a dissolved liquid.

Contents (% by mass) of the metal elements in the metal sulfides in the sulfide solid electrolyte composites in the five samples obtained under the above conditions are defined as A6 to A10. An arithmetic mean value Aave2 of A6 to A10 represented by the following formula is obtained.

[Math. 3]

$$Aave2 = (A6 + A7 + A8 + A9 + A10) / 5$$

The variation (%) is obtained by the following formula using A6 to A10 and Aave2 obtained by the above formula.

[Math. 4]

$$Variation\ (\%) = \frac{\{\sqrt{(A6-Aave2)^2}+\sqrt{(A7-Aave2)^2}+\sqrt{(A8-Aave2)^2}+\sqrt{(A9-Aave2)^2}+\sqrt{(A10-Aave2)^2}\}\ /5}{Aave2} \times 100$$

The variation can be reduced by maintaining a long mixing time in the solid phase method, and by maintaining a long residence time in a molten state in the melting method.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the present specification discloses the following.

[1] A method for producing a sulfide solid electrolyte composite, the method including:

adding a metal compound to a solution containing at least one sulfide solid electrolyte raw material and dispersing the metal compound or a compound derived from the metal compound to obtain a metal dispersion liquid;
removing a solvent of the metal dispersion liquid to obtain a composite powder of the metal compound or the compound derived from the metal compound and the sulfide solid electrolyte raw material; and
obtaining the sulfide solid electrolyte composite using the composite powder.

[2] The method for producing a sulfide solid electrolyte composite according to [1], in which the sulfide solid electrolyte composite is obtained by a solid phase method using the composite powder.

[3] The method for producing a sulfide solid electrolyte composite according to [1], in which the sulfide solid electrolyte composite is obtained by a melting method using the composite powder.

[4] The method for producing a sulfide solid electrolyte composite according to any one of [1] to [3], in which the metal compound is a tin compound.

[5] The method for producing a sulfide solid electrolyte composite according to any one of [1] to [3], in which the metal compound is a metal sulfide.

[6] The method for producing a sulfide solid electrolyte composite according to [5], in which the metal sulfide is tin sulfide.

[7] The method for producing a sulfide solid electrolyte composite according to any one of [1] to [6], in which the sulfide solid electrolyte raw material is a lithium halide.

[8] The method for producing a sulfide solid electrolyte composite according to [7], in which the lithium halide is lithium bromide.

[9] The method for producing a sulfide solid electrolyte composite according to any one of [1] to [6], in which the sulfide solid electrolyte raw material is lithium hydroxide.

[10] The method for producing a sulfide solid electrolyte composite according to any one of [1] to [9], in which the solvent is removed after adding an alkali metal sulfide to the metal dispersion liquid.

[11] The method for producing a sulfide solid electrolyte composite according to [10], in which the alkali metal sulfide is lithium sulfide.

[12] The method for producing a sulfide solid electrolyte composite according to any one of [1] to [9], in which the solvent is removed after introducing hydrogen sulfide into the metal dispersion liquid.

[13] The method for producing a sulfide solid electrolyte composite according to any one of [1] to [12], in which the sulfide solid electrolyte composite is obtained using the composite powder which has been reacted with hydrogen sulfide.

[14] A sulfide solid electrolyte composite containing a metal sulfide, in which a variation of the metal sulfide in the sulfide solid electrolyte composite is 15% or less.

[15] A method for producing a composite powder, the method including:

adding a metal compound to a solution containing at least one sulfide solid electrolyte raw material and dispersing the metal compound or a compound derived from the metal compound to obtain a metal dispersion liquid; and
removing a solvent of the metal dispersion liquid to obtain the composite powder of the metal compound or the compound derived from the metal compound and the sulfide solid electrolyte raw material.

EXAMPLES

Hereinafter, the present invention is described in detail with reference to Examples, but the present invention is not limited thereto. Examples 1 to 5 are Inventive Examples using the solid phase method, and Examples 7 to 11 are Inventive Examples using the melting method. Example 6 is a Comparative Example using the solid phase method, and Example 12 is a Comparative Example using the melting method.

<Preparation of Sulfide Solid Electrolyte Composite>

(Example 1)

First, 117.5 g of lithium bromide as a sulfide solid electrolyte raw material was added to 330.8 g of water to prepare a lithium bromide aqueous solution. Next, 12.6 g of tin chloride dihydrate as a metal compound was added to the lithium bromide aqueous solution, and a dispersion treatment was performed using an ultrasonic homogenizer to form a cloudy suspended matter. Accordingly, a lithium bromide aqueous solution in which a basic salt derived from tin chloride (Sn(OH)Cl) was dispersed was obtained.

Next, 2.6 g of lithium sulfide was added to the lithium bromide aqueous solution in which the basic salt derived from tin chloride (Sn(OH)Cl) was dispersed, and the basic salt derived from tin chloride (Sn(OH)Cl) was sulfurized to obtain a lithium bromide aqueous solution (metal dispersion liquid) in which tin sulfide was dispersed.

Subsequently, the lithium bromide aqueous solution in which tin sulfide was dispersed was dried under reduced pressure and heating using a vibration drying apparatus (product name: VH type, manufactured by CHUO KAKOHKI CO.,LTD.). The pressure was reduced to 2 kPa, the temperature was raised to 160°C over 100 hours, and after maintaining at 160°C for 24 hours, the temperature was lowered and a sample was recovered. The obtained lithium bromide in which tin sulfide was dispersed was further pulverized using an agate mortar to obtain a lithium bromide powder (composite powder) in which tin sulfide was dispersed.

Subsequently, as sulfide solid electrolyte raw materials, a lithium sulfide powder (manufactured by Sigma Co., Ltd., purity: 99.98%), a phosphorus pentasulfide powder (manufactured by Sigma Co., Ltd., purity: 99%), a lithium chloride powder (manufactured by Sigma Co., Ltd., purity: 99.99%), and a lithium bromide powder in which tin sulfide was dispersed which was prepared above, were weighed in a dry nitrogen atmosphere to have a composition ratio of $Li_{5.3}PS_{4.2}Cl_{0.8}Br_{0.8}Sn_{0.033}$. These powders were mixed in a mixer in the same atmosphere, and then further mixed using a planetary ball mill (LP-M2, manufactured by ITO SEISAKUSHO CO., LTD.) to obtain a raw material mixture. The mixing by the planetary ball mill was performed at 400 rpm for 20 hours using a ball having a particle diameter of 10 mm. The obtained raw material mixture was placed in a sealed quartz tube and heated and fired at 450°C for 5 hours, thereby obtaining a sulfide solid electrolyte composite. A total of five sulfide solid electrolyte composite samples were prepared using the lithium bromide powder (composite powder) in which tin sulfide was dispersed, which was prepared in the same lot.

Example 1 corresponds to the sulfide solid electrolyte composite produced by the second method described above in the section <<Method for Producing Sulfide Solid Electrolyte Composite>> as the present production method.

(Example 2)

Instead of adding lithium sulfide to the lithium bromide aqueous solution in which the basic salt derived from tin chloride (Sn(OH)Cl) was dispersed in Example 1, hydrogen sulfide flowed from a nozzle provided in a dispersion liquid, and bubbling was performed in the dispersion liquid. A temperature was 25°C, and hydrogen sulfide was supplied from a cylinder at 0.1 SLM for 60 minutes. A sulfide solid electrolyte composite in Example 2 was prepared in the same manner as in Example 1 except that the lithium bromide aqueous solution (metal dispersion liquid) in which tin sulfide was dispersed was obtained by the bubbling with hydrogen sulfide.

Example 2 corresponds to the sulfide solid electrolyte composite produced by the second method described above in the section <<Method for Producing Sulfide Solid Electrolyte Composite>> as the present production method.

A total of five sulfide solid electrolyte composite samples in Example 2 were also prepared.

(Example 3)

First, 117.5 g of lithium bromide as a sulfide solid electrolyte raw material was added to 330.8 g of water to prepare a lithium bromide aqueous solution. Subsequently, 3.5 g of tin(II) sulfide (manufactured by Sigma Co., Ltd.) as a metal compound was added to the lithium bromide aqueous solution, and a dispersion treatment was performed for 1 minute using an ultrasonic homogenizer to obtain a lithium bromide aqueous solution (metal dispersion liquid) in which tin sulfide was dispersed.

Subsequently, the lithium bromide aqueous solution in which tin sulfide was dispersed was heated and dried under reduced pressure at a temperature of 160°C and a pressure of 2 kPa using a vibration drying apparatus (product name: VH type, manufactured by CHUO KAKOHKI CO.,LTD.) to obtain lithium bromide in which tin sulfide was dispersed. Lithium bromide was then pulverized in an agate mortar to obtain a lithium bromide powder (composite powder) in which tin sulfide was dispersed.

Subsequently, a raw material mixture was prepared, heated, and fired in the same manner as in Example 1 to obtain a sulfide solid electrolyte composite in Example 3.

Example 3 corresponds to the sulfide solid electrolyte composite produced by the first method described above in the section <<Method for Producing Sulfide Solid Electrolyte Composite>> as the present production method.

A total of five sulfide solid electrolyte composite samples in Example 3 were also prepared.

(Example 4)

First, 50.0 g of lithium hydroxide monohydrate as a sulfide solid electrolyte raw material was added to 330.8 g of water to prepare a lithium hydroxide aqueous solution. Next, 5.2 g of tin chloride dihydrate as a metal compound was added to the lithium hydroxide aqueous solution, and a dispersion treatment was performed for 1 minute using an ultrasonic homogenizer to form a cloudy suspended matter (tin hydroxide ($Sn(OH)_3^-$). Accordingly, a lithium hydroxide aqueous solution in which tin hydroxide was dispersed was obtained.

Next, hydrogen sulfide flowed into the lithium hydroxide aqueous solution in which tin hydroxide was dispersed from a nozzle provided in a dispersion liquid, and bubbling was performed in the dispersion liquid. A temperature was 25°C, and hydrogen sulfide was supplied from a cylinder at 0.1 SLM for 60 minutes. A lithium hydroxide aqueous solution (metal dispersion liquid) in which tin sulfide was dispersed was obtained by bubbling with hydrogen sulfide.

Subsequently, the lithium hydroxide aqueous solution in which tin sulfide was dispersed was heated and dried under reduced pressure at a temperature of 85°C and a pressure of 2 kPa using a vibration drying apparatus (product name: VH type, manufactured by CHUO KAKOHKI CO.,LTD.) to obtain a lithium sulfide powder (composite powder) in which tin sulfide was dispersed.

Subsequently, a raw material mixture was prepared, heated, and fired in the same manner as in Example 1 to obtain a sulfide solid electrolyte composite in Example 4.

Example 4 corresponds to the sulfide solid electrolyte composite produced by the second method described above in the section <<Method for Producing Sulfide Solid Electrolyte Composite>> as the present production method.

A total of five sulfide solid electrolyte composite samples in Example 4 were also prepared.

(Example 5)

First, 50.0 g of lithium hydroxide monohydrate as a sulfide solid electrolyte raw material was added to 330.8 g of water to prepare a lithium hydroxide aqueous solution. Next, 5.2 g of tin chloride dihydrate as a metal compound was added to the lithium hydroxide aqueous solution, and a dispersion treatment was performed for 1 minute using an ultrasonic homogenizer to form a cloudy suspended matter (tin hydroxide ($Sn(OH)_3^-$). Accordingly, a lithium hydroxide aqueous solution (metal dispersion liquid) in which tin hydroxide was dispersed was obtained.

Subsequently, the lithium hydroxide aqueous solution in which tin hydroxide was dispersed was heated and dried under reduced pressure at a temperature of 85°C and a pressure of 2 kPa using a vibration drying apparatus (product name: VH type, manufactured by CHUO KAKOHKI CO.,LTD.) to obtain lithium hydroxide in which tin was dispersed. Lithium hydroxide was then pulverized in an agate mortar to obtain a lithium hydroxide powder in which tin was dispersed.

Subsequently, the lithium hydroxide powder in which tin was dispersed was stirred to react tin with hydrogen sulfide at a temperature of 200°C using a vibration drying apparatus (product name: VH type, manufactured by CHUO KAKOHKI CO.,LTD.), to obtain a lithium sulfide powder (composite powder) in which tin sulfide was dispersed. The obtained lithium sulfide powder in which tin sulfide was dispersed was further pulverized using an agate mortar.

Subsequently, a raw material mixture was prepared, heated, and fired in the same manner as in Example 1 to obtain a sulfide solid electrolyte composite in Example 5.

Example 5 corresponds to the sulfide solid electrolyte composite produced by the third method described above in the section <<Method for Producing Sulfide Solid Electrolyte Composite>> as the present production method.

A total of five sulfide solid electrolyte composite samples in Example 5 were also prepared.

(Example 6)

First, 27.3 g of lithium sulfide (manufactured by Sigma Co., Ltd.) and 3.5 g of tin(II) sulfide (manufactured by Sigma Co., Ltd.) were weighed and placed in a 500 mL airtight container and mixed by shaking well for 30 minutes to obtain a mixed powder. Subsequently, a raw material mixture was prepared, heated, and fired in the same manner as in Example 1 to obtain a sulfide solid electrolyte composite in Example 6.

A total of five sulfide solid electrolyte composite samples in Example 6 were also prepared.

(Examples 7 to 11)

A sulfide solid electrolyte composite in each of Examples 7 to 11 was prepared in the same manner as in Examples 1 to 5 except that the sulfide solid electrolyte composite was prepared by the melting method instead of the solid phase method in Examples 1 to 5.

That is, as the melting method, first, a lithium sulfide powder (manufactured by Sigma Co., Ltd., purity: 99.98%), a phosphorus pentasulfide powder (manufactured by Sigma Co., Ltd., purity: 99%), and a lithium chloride powder (manufactured by Sigma Co., Ltd., purity: 99.99%) as sulfide solid electrolyte raw materials, and a prepared lithium bromide powder in which tin sulfide was dispersed, were weighed in a dry nitrogen atmosphere to have a composition ratio of $Li_{5.3}PS_{4.2}Cl_{0.8}Br_{0.8}Sn_{0.033}$, and mixed in the same atmosphere by a mixer to obtain a raw material mixture.

Next, the obtained raw material mixture was placed in a heat-resistant container and heated and melted under conditions of a pressure of 1 atmosphere and a temperature of 750°C for 0.5 hours. At this time, a sulfur gas obtained by heating elemental sulfur at a temperature of 350°C was supplied so that a partial pressure of the sulfur gas became 0.1 atm while accompanying $N_2$ as a carrier gas to obtain a gas atmosphere containing a sulfur element, and sulfur was introduced into a melt by performing heating and melting under the gas atmosphere. A content of the sulfur gas in the gas atmosphere containing the sulfur element was 0.1 vol%.

Thereafter, cooling was performed at a cooling rate of 1°C/sec to 1,000°C/sec to obtain a solid as a sulfide solid electrolyte containing an amorphous phase and an argyrodite crystalline phase. Next, the solid was crystallized at 450°C for 1 hour in a nitrogen gas atmosphere to obtain a sulfide solid electrolyte composite containing a sulfide solid electrolyte containing argyrodite crystals.

A total of five sulfide solid electrolyte composite samples in each of Examples 7 to 11 were also prepared.

(Example 12)

First, 27.3 g of lithium sulfide (manufactured by Sigma Co., Ltd.) and 3.5 g of tin(II) sulfide (manufactured by Sigma Co., Ltd.) were weighed and placed in a 500 mL airtight container and mixed by shaking well for 30 minutes to obtain a mixed powder. Subsequently, a sulfide solid electrolyte composite in Example 12 was prepared by the same melting method as in Examples 7 to 11.

A total of five sulfide solid electrolyte composite samples in Example 12 were also prepared.

<Evaluation of Homogeneity>

(Variation in Metal Sulfide in Composite Powder)

A variation of the metal sulfide in the composite powder was determined by the following method.

First, five samples of 0.1 g were taken from the composite powder obtained in each example and heated, decomposed, and dissolved in nitric acid, sulfuric acid, and hydrofluoric acid (nitric acid + sulfuric acid + hydrofluoric acid), and each obtained substance was subjected to an ICP (inductively coupled plasma) emission spectrometer (Agilent 5800, manufactured by Agilent Technologies) to quantify a metal element in the metal sulfide in the composite powder.

Contents (% by mass) of the metal elements in the metal sulfides in the composite powders in the five samples determined under the above conditions were defined as A1 to A5. The arithmetic mean value Aave1 of A1 to A5 represented by the following formula was obtained.

[Math. 5]

$$Aave1 = (A1 + A2 + A3 + A4 + A5) / 5$$

A variation (%) of the metal sulfide in the composite powder was obtained by the following formula using A1 to A5 and Aave1 obtained by the above formula.

[Math. 6]

$$\text{Variation (\%)} = \frac{\left\{\sqrt{(A1-Aave1)^2}+\sqrt{(A2-Aave1)^2}+\sqrt{(A3-Aave1)^2}+\sqrt{(A4-Aave1)^2}+\sqrt{(A5-Aave1)^2}\right\}/5}{Aave1} \times 100$$

Results are shown in Tables 1 and 2.

(Variation in Metal Sulfide in Sulfide Solid Electrolyte Composite)

The variation of the metal sulfide in the sulfide solid electrolyte composite was determined by the following method.

First, 0.1 g of sulfide solid electrolyte composite was taken from each of the five sulfide solid electrolyte composite samples obtained in each example and heated, decomposed, and dissolved in nitric acid, sulfuric acid, and hydrofluoric acid (nitric acid + sulfuric acid + hydrofluoric acid), and an obtained substance was subjected to an ICP (inductively coupled plasma) emission spectrometer (Agilent 5800, manufactured by Agilent Technologies) to quantify a metal element in the metal sulfide in the sulfide solid electrolyte composite.

Contents (% by mass) of the metal elements in the metal sulfides in the sulfide solid electrolyte composites in the five samples obtained under the above conditions were defined as A6 to A10. The arithmetic mean value Aave2 of A6 to A10 represented by the following formula was obtained.

[Math. 7]

$$Aave2 = (A6 + A7 + A8 + A9 + A10) / 5$$

A variation (%) of the metal sulfide in the sulfide solid electrolyte composite was obtained by the following formula using A6 to A10 and Aave2 obtained by the above formula.

[Math. 8]

$$\text{Variation (\%)} = \frac{\{\sqrt{(A6-Aave2)^2}+\sqrt{(A7-Aave2)^2}+\sqrt{(A8-Aave2)^2}+\sqrt{(A9-Aave2)^2}+\sqrt{(A10-Aave2)^2}\}\ /5}{Aave2} \times 100$$

The variation in the sulfide solid electrolyte composite was evaluated according to the following criteria.

A: variation is 15% or less
B: variation is more than 15%

Results are shown in Tables 1 and 2.

[Table 1]

| | Metal compound | Sulfide solid electrolyte raw material in aqueous solution | Sulfurize in aqueous solution | Metal dispersion liquid | Sulfurize after solvent removal | Composite powder | Solid phase method/ melting method | Note | Variation in metal sulfide in composite powder | Variation in metal sulfide in sulfide solid electrolyte composite | |
|---|---|---|---|---|---|---|---|---|---|---|---|
| | | | | | | | | | | Variation (%) | Evaluation |
| Example 1 | Tin chloride dihydrate | Lithium bromide | Add lithium sulfide | Lithium bromide aqueous solution in which tin sulfide is dispersed | No | Lithium bromide powder in which tin sulfide is dispersed | Solid phase method | Second method | 9% (metal sulfide: tin sulfide) | 6% (metal sulfide: tin sulfide) | A |
| Example 2 | Tin chloride dihydrate | Lithium bromide | Bubble hydrogen sulfide | Lithium bromide aqueous solution in which tin sulfide is dispersed | No | Lithium bromide powder in which tin sulfide is dispersed | Solid phase method | Second method | 10% (metal sulfide: tin sulfide) | 5% (metal sulfide: tin sulfide) | A |
| Example 3 | Tin sulfide | Lithium bromide | No | Lithium bromide aqueous solution in which tin sulfide is dispersed | No | Lithium bromide powder in which tin sulfide is dispersed | Solid phase method | First method | 8% (metal sulfide: tin sulfide) | 4% (metal sulfide: tin sulfide) | A |
| Example 4 | Tin chloride dihydrate | Lithium hydroxide monohydrate | Bubble hydrogen sulfide | Lithium hydroxide aqueous solution in which tin sulfide is dispersed | No | Lithium sulfide powder in which tin sulfide is dispersed | Solid phase method | Second method | 7% (metal sulfide: tin sulfide) | 4% (metal sulfide: tin sulfide) | A |
| Example 5 | Tin chloride dihydrate | Lithium hydroxide monohydrate | No | Lithium hydroxide aqueous solution in which tin hydroxide is dispersed | Introduce hydrogen sulfide | Lithium sulfide powder in which tin sulfide is dispersed | Solid phase method | Third method | 11% (metal sulfide: tin sulfide) | 6% (metal sulfide: tin sulfide) | A |
| Example 6 | Tin sulfide | No | No | - | No | Mixture of tin sulfide and lithium sulfide powder | Solid phase method | - | 33% (metal sulfide: tin sulfide) | 43% (metal sulfide: tin sulfide) | B |

[Table 2]

| | Metal compound | Sulfide solid electrolyte raw material in aqueous solution | Sulfurize in aqueous solution | Metal dispersion liquid | Sulfurize after solvent removal | Composite powder | Solid phase method/ melting method | Note | Variation in metal sulfide in composite powder | Variation in metal sulfide in sulfide solid electrolyte composite | |
|---|---|---|---|---|---|---|---|---|---|---|---|
| | | | | | | | | | | Variation (%) | Evaluat ion |
| Example 7 | Tin chloride dihydrate | Lithium bromide | Add lithium sulfide | Lithium bromide aqueous solution in which tin sulfide is dispersed | No | Lithium bromide powder in which tin sulfide is dispersed | Melting method | Second method | 9% (metal sulfide: tin sulfide) | 5% (metal sulfide: tin sulfide) | A |
| Example 8 | Tin chloride dihydrate | Lithium bromide | Bubble hydrogen sulfide | Lithium bromide aqueous solution in which tin sulfide is dispersed | No | Lithium bromide powder in which tin sulfide is dispersed | Melting method | Second method | 10% (metal sulfide: tin sulfide) | 4% (metal sulfide: tin sulfide) | A |
| Example 9 | Tin sulfide | Lithium bromide | No | Lithium bromide aqueous solution in which tin sulfide is dispersed | No | Lithium bromide powder in which tin sulfide is dispersed | Melting method | First method | 8% (metal sulfide: tin sulfide) | 4% (metal sulfide: tin sulfide) | A |
| Example 10 | Tin chloride dihydrate | Lithium hydroxide monohydrate | Bubble hydrogen sulfide | Lithium hydroxide aqueous solution in which tin sulfide is dispersed | No | Lithium sulfide powder in which tin sulfide is dispersed | Melting method | Second method | 7% (metal sulfide: tin sulfide) | 3% (metal sulfide: tin sulfide) | A |
| Example 11 | Tin chloride dihydrate | Lithium hydroxide monohydrate | No | Lithium hydroxide aqueous solution in which tin hydroxide is dispersed | Introduce hydrogen sulfide | Lithium sulfide powder in which tin sulfide is dispersed | Melting method | Third method | 11% (metal sulfide: tin sulfide) | 5% (metal sulfide: tin sulfide) | A |
| Example 12 | Tin sulfide | No | No | - | No | Mixture of tin sulfide and lithium sulfide powder | Melting method | - | 33% (metal sulfide: tin sulfide) | 35% (metal sulfide: tin sulfide) | B |

EP 4 645 346 A1

20

In Examples 1 to 4 and Examples 7 to 10, since the metal sulfide (tin sulfide) was dispersed in the aqueous solution, the variation of the metal sulfide (tin sulfide) in the finally obtained sulfide solid electrolyte composite was small, and the homogeneity thereof was excellent. In Examples 5 and 11, since tin hydroxide was dispersed in the aqueous solution, by sulfurizing tin hydroxide to form tin sulfide after removing the solvent, the variation of the metal sulfide (tin sulfide) in the finally obtained sulfide solid electrolyte composite was small, and the homogeneity thereof was excellent. Accordingly, the effect of preventing the generation of hydrogen sulfide by the metal sulfide is also obtained.

On the other hand, in Examples 6 and 12, since tin sulfide having a large specific gravity was deviated during the mixing of the raw materials, the variation in the metal sulfide (tin sulfide) in the finally obtained sulfide solid electrolyte composite was large, and the homogeneity thereof was poor.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2022-212572) filed on December 28, 2022, contents of which are incorporated herein by reference.

**Claims**

1. A method for producing a sulfide solid electrolyte composite, the method comprising:

    adding a metal compound to a solution comprising at least one sulfide solid electrolyte raw material and dispersing the metal compound or a compound derived from the metal compound to obtain a metal dispersion liquid;
    removing a solvent of the metal dispersion liquid to obtain a composite powder of the metal compound or the compound derived from the metal compound and the sulfide solid electrolyte raw material; and
    obtaining the sulfide solid electrolyte composite using the composite powder.

2. The method for producing a sulfide solid electrolyte composite according to claim 1, wherein the sulfide solid electrolyte composite is obtained by a solid phase method using the composite powder.

3. The method for producing a sulfide solid electrolyte composite according to claim 1, wherein the sulfide solid electrolyte composite is obtained by a melting method using the composite powder.

4. The method for producing a sulfide solid electrolyte composite according to claim 1, wherein the metal compound is a tin compound.

5. The method for producing a sulfide solid electrolyte composite according to claim 1, wherein the metal compound is a metal sulfide.

6. The method for producing a sulfide solid electrolyte composite according to claim 5, wherein the metal sulfide is tin sulfide.

7. The method for producing a sulfide solid electrolyte composite according to claim 1, wherein the sulfide solid electrolyte raw material is a lithium halide.

8. The method for producing a sulfide solid electrolyte composite according to claim 7, wherein the lithium halide is lithium bromide.

9. The method for producing a sulfide solid electrolyte composite according to claim 1, wherein the sulfide solid electrolyte raw material is lithium hydroxide.

10. The method for producing a sulfide solid electrolyte composite according to claim 1, wherein the solvent is removed after adding an alkali metal sulfide to the metal dispersion liquid.

11. The method for producing a sulfide solid electrolyte composite according to claim 10, wherein the alkali metal sulfide is lithium sulfide.

12. The method for producing a sulfide solid electrolyte composite according to claim 1, wherein the solvent is removed after introducing hydrogen sulfide into the metal dispersion liquid.

13. The method for producing a sulfide solid electrolyte composite according to claim 1, wherein the sulfide solid electrolyte composite is obtained using the composite powder which has been reacted with hydrogen sulfide.

14. A sulfide solid electrolyte composite comprising a metal sulfide, wherein a variation of the metal sulfide in the sulfide solid electrolyte composite is 15% or less.

15. A method for producing a composite powder, the method comprising:

adding a metal compound to a solution comprising at least one sulfide solid electrolyte raw material and dispersing the metal compound or a compound derived from the metal compound to obtain a metal dispersion liquid; and
removing a solvent of the metal dispersion liquid to obtain the composite powder of the metal compound or the compound derived from the metal compound and the sulfide solid electrolyte raw material.

## FIG. 1

```
                    ┌─────────────────────┐
                    │        START        │
                    └─────────────────────┘
                              │
                              ▼
┌──────────────────────────────────────────────────────┐
│ ADD METAL COMPOUND TO SOLUTION CONTAINING AT LEAST     │
│ ONE SULFIDE SOLID ELECTROLYTE RAW MATERIAL TO OBTAIN    │         S1
│ METAL DISPERSION LIQUID IN WHICH METAL COMPOUND OR      │
│ COMPOUND DERIVED FROM METAL COMPOUND IS DISPERSED       │
└──────────────────────────────────────────────────────┘
                              │
                              ▼
┌──────────────────────────────────────────────────────┐
│ REMOVE SOLVENT OF METAL DISPERSION LIQUID TO OBTAIN     │
│ COMPOSITE POWDER OF METAL COMPOUND OR COMPOUND          │         S2
│ DERIVED FROM METAL COMPOUND AND SULFIDE SOLID           │
│ ELECTROLYTE RAW MATERIAL                                 │
└──────────────────────────────────────────────────────┘
                              │
                              ▼
┌──────────────────────────────────────────────────────┐
│ OBTAIN SULFIDE SOLID ELECTROLYTE                       │         S3
│ COMPOSITE USING COMPOSITE POWDER                        │
└──────────────────────────────────────────────────────┘
                              │
                              ▼
                    ┌─────────────────────┐
                    │         END         │
                    └─────────────────────┘
```

*FIG. 2*

```
                    ┌─────────────────────────────┐
                    │            START            │
                    └─────────────────────────────┘
                                  │
                                  ▼
        ┌─────────────────────────────────────────────────┐
        │  ADD METAL COMPOUND TO SOLUTION CONTAINING AT    │
        │  LEAST ONE SULFIDE SOLID ELECTROLYTE RAW         │    ～S1
        │  MATERIAL TO OBTAIN METAL DISPERSION LIQUID IN   │
        │  WHICH METAL COMPOUND OR COMPOUND DERIVED FROM   │
        │  METAL COMPOUND IS DISPERSED                     │
        └─────────────────────────────────────────────────┘
                                  │
                                  ▼
        ┌─────────────────────────────────────────────────┐
        │  REMOVE SOLVENT OF METAL DISPERSION LIQUID TO    │
        │  OBTAIN COMPOSITE POWDER OF METAL COMPOUND OR    │    ～S2
        │  COMPOUND DERIVED FROM METAL COMPOUND AND        │
        │  SULFIDE SOLID ELECTROLYTE RAW MATERIAL          │
        └─────────────────────────────────────────────────┘
                                  │
                                  ▼
        ┌─────────────────────────────────────────────────┐
        │  OBTAIN SULFIDE SOLID ELECTROLYTE COMPOSITE BY   │    ～S3a
        │  SOLID PHASE METHOD USING COMPOSITE POWDER       │
        └─────────────────────────────────────────────────┘
                                  │
                                  ▼
                    ┌─────────────────────────────┐
                    │            END              │
                    └─────────────────────────────┘
```

*FIG. 3*

```
┌─────────────────────────┐
│          START          │
└─────────────────────────┘
              │
              ▼
┌─────────────────────────────────────────────────┐
│ ADD METAL COMPOUND TO SOLUTION CONTAINING AT LEAST│      ⌇ S1
│ ONE SULFIDE SOLID ELECTROLYTE RAW MATERIAL TO OBTAIN│
│ METAL DISPERSION LIQUID IN WHICH METAL COMPOUND OR │
│ COMPOUND DERIVED FROM METAL COMPOUND IS DISPERSED  │
└─────────────────────────────────────────────────┘
              │
              ▼
┌─────────────────────────────────────────────────┐
│ REMOVE SOLVENT OF METAL DISPERSION LIQUID TO OBTAIN│     ⌇ S2
│ COMPOSITE POWDER OF METAL COMPOUND OR COMPOUND    │
│ DERIVED FROM METAL COMPOUND AND SULFIDE SOLID     │
│ ELECTROLYTE RAW MATERIAL                          │
└─────────────────────────────────────────────────┘
              │
              ▼
┌─────────────────────────────────────────────────┐
│ OBTAIN SULFIDE SOLID ELECTROLYTE COMPOSITE BY     │     ⌇ S3b
│ MELTING METHOD USING COMPOSITE POWDER             │
└─────────────────────────────────────────────────┘
              │
              ▼
┌─────────────────────────┐
│           END           │
└─────────────────────────┘
```

## INTERNATIONAL SEARCH REPORT

| International application No. |
| --- |
| **PCT/JP2023/046398** |

| A. | CLASSIFICATION OF SUBJECT MATTER |
| --- | --- |

*H01B 13/00*(2006.01)i; *H01M 10/0562*(2010.01)i
FI:  H01B13/00 Z; H01M10/0562

According to International Patent Classification (IPC) or to both national classification and IPC

| B. | FIELDS SEARCHED |
| --- | --- |

Minimum documentation searched (classification system followed by classification symbols)

H01B13/00; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2019/239949 A1 (MITSUBISHI GAS CHEMICAL COMPANY, INC.) 19 December 2019 (2019-12-19) paragraphs [0050]-[0051] | 1, 4-8, 10-11, 14-15 |
| Y | | 2-3, 9, 12-13 |
| Y | WO 2018/062092 A1 (TDK CORPORATION) 05 April 2018 (2018-04-05) paragraphs [0032]-[0034] | 2-3 |
| Y | JP 2015-5372 A (IDEMITSU KOSAN CO., LTD.) 08 January 2015 (2015-01-08) paragraphs [0021], [0075] | 9, 12 |
| Y | WO 2016/098351 A1 (IDEMITSU KOSAN CO., LTD.) 23 June 2016 (2016-06-23) paragraph [0010] | 13 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 February 2024** | **12 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/046398**

| Patent document cited in search report | Publication date (day/month/year) | Patent family member(s) | Publication date (day/month/year) |
|---|---|---|---|
| WO 2019/239949 A1 | 19 December 2019 | US 2021/0313618 A1 paragraphs [0085]-[0088] EP 3809425 A1 CN 112074918 A KR 10-2021-0020996 A CA 3096602 A1 | |
| WO 2018/062092 A1 | 05 April 2018 | US 2020/0031670 A1 paragraphs [0041]-[0045] CN 109792081 A | |
| JP 2015-5372 A | 08 January 2015 | (Family: none) | |
| WO 2016/098351 A1 | 23 June 2016 | US 2017/0368515 A1 paragraphs [0027]-[0030] EP 3235787 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022139139 A
- JP 2022212572 A